# EUROPEAN PATENT APPLICATION

(11) **EP 1 156 021 A1**
(43) Date of publication of application: **21.11.2001**
(21) Application number: 01111855.1
(22) Date of filing: 16.05.2001
(51) Int. Cl.: C03C 11/00, C03B 19/10, C03C 3/083, C03C 17/25

(54) **Hollow aluminosilicate glass microspheres and process for their production**

(30) Priority: 19.05.2000 JP 2000148525
(71) Applicant: Asahi Glass Co., Ltd., Tokyo 100-8405 (JP)
(72) Inventor: Yamada, Kenji, Ichihara-shi, Chiba (JP); Hirano, Hachiro, Ichihara-shi, Chiba (JP); Kusaka, Makoto, Ichihara-shi, Chiba (JP); Tanaka, Masaharu, Ichihara-shi, Chiba (JP)
(74) Representative: Müller-Boré & Partner Patentanwälte

(57) **Abstract**

Hollow aluminosilicate glass microspheres which are hollow glass microspheres having an average particle size of from 1 to 20 µm based on volume, an average particle density of from 0.20 to 1.50 g/cm³, a sphericity within a range of 1≦(long axial length/short axial length)<1.2 and a composition comprising from 30 to 85 mass% of SiO₂, from 6 to 45 mass% of Al₂O₃, from 0 to 30 mass% of an alkali metal oxide, from 0 to 30 mass% of an alkaline earth metal oxide and from 0 to 1 mass% of B₂O₃, and which have a strength at 10 volume% collapse of at least 10% of the theoretical strength given by the formula 16.7×E×(t/2a)^{2.5}, where E is the Young's modulus (unit: GPa) of the glass constituting the hollow glass microspheres, t is the thickness (unit: mm) of the shell of the hollow glass microspheres, and a is the hollow radius (unit: mm) of the hollow glass microspheres.

## Description

The present invention relates to hollow aluminosilicate glass microspheres and a process for producing them.

Hollow glass microspheres are commonly called glass microballoons (hollow bodies), have a low specific gravity as compared with other fillers, have heat resistance, pressure resistance and impact resistance, and thereby have such an effect that when used as a filler, they improve physical properties such as strength, dimensional stability and moldability of the packed product.

Accordingly, they are widely used for weight-reduction of molded resin components for e.g. automobiles, portable electronic equipments or household electric appliance, patty, sealing materials, buoyancy materials for ships, synthetic wood, reinforced cement outer wall materials, light weight outer wall plates and artificial marble.

Further, they are materials which are expected to develop into various applications such as sound insulators, acoustic materials, heat insulating materials, insulants and dielectric constant-lowering materials. Particularly, as applications which are expected to expand by micro-sizing, their applications to heat insulating coatings for heat insulating applications, and wire coating materials and substrates for applications for lowering the dielectric constant, may, for example, be mentioned. Further, they may be used for applications to water gel, paper clay, rubber and coating materials.

Thus, hollow glass microspheres are useful for various purposes, and accordingly more excellent hollow glass microspheres have been strongly required in recent years.

Various proposals have already been made for hollow glass microspheres and processes for their production.

For example, JP-A-58-156551 discloses a process of forming hollow borosilicate glass microspheres, which comprises melting materials such as SiO₂, H₃BO₃, CaCO₃, Na₂CO₃, NH₄H₂PO₄ and Na₂SO₄ at a high temperature of at least 1000°C to form a glass containing a sulfur component in a large amount, then subjecting the glass to dry pulverization, followed by classification, and dispersing and retaining a fine glass powder thus obtained in flame so as to foam the sulfur component as a foaming agent component.

Further, JP-B-4-37017 discloses a process for obtaining hollow glass microspheres by baking in a furnace a fine powder having glass-forming components and a foaming agent component supported by silica gel.

In these processes, a dried fine glass powder is dispersed in a hot air of a high temperature, whereby the glass is heated, and the viscosity of the glass thereby lowers, and at the same time, a gas will form by heat decomposition of a foaming agent component. Consequently, due to the surface tension, the shape of particles will be spherical, and at the same time, the particles will be hollow due to the gas formed in the particles.

However, in such conventional techniques, the dried fine glass powder is dispersed in a hot air of a high temperature, whereby the glass powder is likely to agglomerate, as the powder becomes small. Further, some particles will fuse to one another during glass melting. Accordingly, although sufficient hollowness is obtainable to impart a weight-reducing effect or a heat-shielding effect, it has been difficult to obtain hollow glass microspheres having fine diameters and a uniform particle size.

Further, JP-B-4-50264 discloses a process for producing hollow glass microspheres from aluminosilicate glass, wherein a volcanic glass debris having a particle size adjusted to be at most 20 µm, was heated and maintained in a hydrochloric acid solution or a sulfuric acid solution for at least 8 hours to differentiate the composition of the surface layer of particles from the composition of the interior of the particles and then subjected to heat treatment at a temperature of from 900 to 1,100°C for from one second to one minute, followed by air classification or sink-and-float separation in water.

However, by this process, the foaming operation is carried out at a rather low temperature range for the glass composition, whereby no adequate sphericity can be attained, and it has been difficult to obtain a product having sufficient strength, as the strength, particularly the strength at 10 volume% collapse, as described hereinafter, is less than 5%.

Further, JP-A-6-154586 discloses a method of using a fine particle material having a large ignition loss, such as a volcanic glass material like volcanic ash, from which aluminosilicate glass is formed. By this method, it is possible to obtain hollow glass microspheres having an average particle size of at most 20 µm, but the material is made to have a hollow structure by heat treatment only, and it has been still difficult to obtain microspheres having a low particle density and adequate strength. Further, sodium is likely to elute from an aluminosilicate composition containing a large amount of sodium, represented by volcanic ash hollow bodies, and there has been a restriction in the use as an electronic material.

Further, in either one of these processes, the pulverized primary particles are made into hollow bodies individually, and there has been no such a concept that a finely pulverized powder is granulated to form hollow bodies. It has been common to form hollow bodies by a process wherein the vicinity of the outer surface is maintained without being melted during heat melting, and internal foaming is maintained without rupture, and when pulverized into fine particles, it has been common to subject such particles to surface treatment.

Accordingly, there has been a problem such that essentially, fine particles excessively pulverized by fine pulverization are disposed without being recycled, and depending upon the shape of the pulverized particles, yield in foaming tends to be low, or particles after foaming are likely to collapse, the surface treatment step is required, or a classifying step after pulverization of the material before foaming is required.

Whereas, JP-A-9-124327 discloses a process which comprises subjecting a glass formulation material containing a foaming agent to wet pulverization to obtain a slurry of the glass formulation material, which is then formed into droplets, and heating the droplets to vitrify them and thereby to obtain glass microspheres. The glass microspheres obtained by this process are useful, for example, as a filler for resins or coating materials, since the surface of a molded product of a resin or the coating surface will be smooth, but they were not fully satisfactory depending upon the conditions for use, with respect to the collapse strength or heat resistance.

Further, the glass material used, was one which brings about a composition of borosilicate glass, soda lime glass or zinc phosphate glass, and it was not possible to obtain highly heat resistant hollow glass bodies or hollow glass bodies suitable for electronic materials.

It is an object of the present invention to solve the problems of the production process and the product quality in the prior art and to provide hollow glass microspheres wherein the particles have a fine diameter, high sphericity, low density and high strength and also have high heat resistance as compared with conventional hollow glass microspheres of e.g. borosilicate glass, efficiently by using natural or synthetic inexpensive materials.

The present invention provides hollow aluminosilicate glass microspheres which are hollow glass microspheres having an average particle size of from 1 to 20 µm based on volume, an average particle density of from 0.20 to 1.50 g/cm³, a sphericity within a range of 1 ≦(long axial length/short axial length)<1.2 and a composition comprising from 30 to 85 mass% of SiO₂, from 6 to 45 mass% of Al₂O₃, from 0 to 30 mass% of an alkali metal oxide, from 0 to 30 mass% of an alkaline earth metal oxide and from 0 to 1 mass% of B₂O₃, and which have a strength at 10 volume% collapse of at least 10% of the theoretical strength given by the formula 16.7×E×(t/2a)^{2.5}, where E is the Young's modulus (unit: GPa) of the glass constituting the hollow glass microspheres, t is the thickness (unit: mm) of the shell of the hollow glass microspheres, and a is the hollow radius (unit: mm) of the hollow glass microspheres.

Further, the present invention provides a process for producing such hollow aluminosilicate glass microspheres, which comprises subjecting a glass formulation material to wet pulverization to obtain a slurry of the material having an average particle size of at most 2 µm, forming the slurry into droplets containing the glass formulation material, heating the droplets to vitrify them and to convert them to hollow glass microspheres.

Now, the present invention will be described in detail with reference to the preferred embodiments.

As mentioned above, the hollow aluminosilicate glass microspheres of the present invention are ones having a fine diameter, low density, high sphericity and high strength, as particles.

Firstly, the particle size is from 1 to 20 µm, preferably from 3 to 15 µm, as an average particle size based on volume. The average particle size based on volume can be measured by a laser scattering type particle size measuring apparatus (for example, Microtruck HRA model 9320-X100, manufactured by NIKKISO Co., LTD. used in Examples).

If the average particle size exceeds 20 µm, when the microspheres are used as an interlayer insulating material for a multilayer substrate or as a filler for a resist material, they may not be accommodated in the predetermined layer thickness, whereby it is likely to have various troubles such as short circuiting of conductive parts. On the other hand, if the average particle size is less than 1 µm, the average particle density will not be less than 1.50 g/cm³, whereby the expected function may not be obtained.

Next, the particle density is from 0.20 to 1.50 g/cm³, preferably from 0.20 to 0.70 g/cm³. This particle density can be measured by a helium gas substitution type dry automatic densimeter (for example, Acupic 1330, manufactured by Shimadzu Corporation, as used in Examples). If the particle density is less than 0.20 g/cm³, the collapse strength is low, such being practically useless, and if it exceeds 1.50 g/cm³, no adequate weight reducing effects, heat insulating effects, dielectric constant-lowering effects or sound insulating effects can be imparted.

Now, with respect to the shape, the hollow bodies of the present invention are substantially spherical and formed of individually foamed spheres, and by visual observation of the photograph taken by a scanning electron microscope (hereinafter referred to as SEM), their surface is smooth, and perforated hollow bodies are not substantially observed. With respect to a specific sphericity, when represented by an aspect ratio of (long axial length/short axial length), it is within a range of 1≦(long axial length/short axial length)<1.2.

If (long axial length/short axial length) ≧1.2, the desired strength may not be obtained, and dimensional stability tends to be hardly maintained when made into a composite material such as a molding compound.

Further, the glass microspheres of the present invention have a strength at 10 volume% collapse of at least 10% of the theoretical strength given by the formula 16.7×E×(t/2a)^{2.5}. Preferably, the strength is at least 15%. Here, the strength at 10 volume% collapse is obtained by measuring the pressure required for 10 volume% of hollow glass microspheres to collapse, when hydrostatic pressure is gradually exerted. Namely, the glass microspheres are dispersed in glycerol, and at least two levels of optionally different pressures are exerted by a pressure resistance test apparatus (for example one manufactured by Kabushiki Kaisha Microtech Nichion, as used in Examples), and volume% of the hollow glass microspheres collapsed is calculated from the difference in the gravity between before and after exerting the respective pressures, and the strength is obtained from the calculated values by extrapolating the pressure required for 10 volume% of the microspheres to collapse.

Here, the Young's modulus is measured by a resonance method, and its unit is GPa. Further, the thickness of the shell and the hollow radius of a hollow glass sphere, are values calculated from an average particle density measured by a dry system automatic densimeter, and its unit is mm.

If the strength at 10 volume% collapse is less than 10%, the microspheres are likely to rupture when an excess stress is created during the processing step such as kneading, and no adequate weight-reducing effects, heat-shielding effects or dielectric constant-lowering effects tend to be obtainable, depending upon the particular purpose.

As a reason why it is possible to obtain hollow glass microspheres having high strength at 10 volume% collapse in the present invention, it is considered that as compared with a conventional process wherein the starting material powder is dispersed and retained in a flame, the mixture of glass raw materials is finely pulverized in a combustible liquid, and such a slurry is formed into droplets, which are heated, whereby granulation, melting and foaming can be carried out at a sufficiently high temperature in a short retention time.

Further, the hollow glass microspheres of the present invention are made of aluminosilicate glass as their glass composition.

If SiO₂ is less than 30%, the chemical durability of glass tends to be poor. On the other hand, if it exceeds 85%, the viscosity of glass tends to be high, and a high calorie will be required at the time of foaming. More preferably, SiO₂ is from 40 to 80%.

If Al₂O₃ is less than 6%, the chemical durability of glass tends to be poor. On the other hand, if it exceeds 45%, the melting property tends to be poor. More preferably, Al₂O₃ is from 10 to 40%.

If alkali metal oxides (such as Na₂O, K₂O and Li₂O) exceed 30%, alkali elution is likely to take place, thus leading to deterioration of the electrical insulating property. The smaller the amount, the better. More preferably, the alkali metal oxides are from 2 to 25%.

If alkaline earth metal oxides (such as CaO, MgO, BaO and SrO) exceed 30%, devitrification of glass is likely to result. Like the alkali metal oxides, the smaller the amount, the better. More preferably, alkaline earth metal oxides are from 2 to 25%.

Components other than SiO₂, Al₂O₃, the alkali metal oxides, the alkaline earth metal oxides and B₂O₃, such as P₂O₅, Fe₂O₃ and TiO₂, are not particularly limited as glass components in the hollow aluminosilicate glass microspheres. However, from the viewpoint of e.g. maintaining the heat resistance or the collapse strength, the smaller the amount, the better. Usually, such additional components are at most 5.0%.

Further, by selecting a raw material having a low content of uranium and thorium, it is possible to obtain hollow glass microspheres suitable as an electronic material having a low radiation of α-rays.

The hollow aluminosilicate glass microspheres of the present invention have such excellent properties. As mentioned above, they usually preferably contain an alkali metal oxide as a glass component. However, if an alkali metal oxide such as Na₂O is contained in a large amount, depending upon the particular application, their use is restricted in spite of the excellent properties, as a filler for a material for an electronic component where elution of sodium should particularly be avoided.

To solve such a problem, the present invention provides, as a preferred embodiment of the hollow aluminosilicate glass microspheres, those having a silica (SiO₂) layer formed on their surface.

Those having a silica layer formed on their surface can be used in a wide range for the electronic materials, as it is possible to prevent elution of sodium from the surface.

Various methods are conceivable to form a silica layer on the surface. However, as a method whereby such a layer can effectively and readily be formed, use of an organic substance containing a silicon element, such as perhydropolysilazane, may be mentioned. Namely, a liquid of such a compound is coated or sprayed on the surface of the glass microspheres to cover them, followed by drying and baking to convert the compound to silica. The silica layer is effective even if it is very thin, and even if it is not necessarily formed over the entire surface of the glass microspheres, a corresponding effect can be obtained.

As compared with conventional fillers, such hollow aluminosilicate glass microspheres of the present invention have further improved light weight property, heat resistance, pressure resistance and impact resistance and have excellent effects for improving physical properties also with respect to the dimensional stability and moldability. Accordingly, for the weight-reducing applications, they can be used suitably for e.g. molding compounds for molded resin components for e.g. automobiles, portable electronic equipments or household electric appliance, patty, sealing materials, buoyancy materials for ships, synthetic wood, reinforced cement outer wall materials, light weight outer wall plates and artificial marble.

Further, they may be used for conventional various applications such as sound insulators, acoustic materials, heat insulating materials, insurants and dielectric constant-lowering materials. Particularly, as applications which are expected to expand by micro-sizing, the applications to heat insulating coatings for heat insulating applications, and wire coating materials and substrates for applications for lowering the dielectric constant may, for example, be mentioned.

When the hollow glass microspheres are used as a filler for a resin, the resin may, for example, be an unsaturated polyester resin, an epoxy resin, a vinyl chloride resin, SBR latex, an acrylic emulsion, a polyurethane resin, a silicone resin, a phenol resin, polypropylene, polyester or a fluorine resin.

Further, they can be suitably used as a filler for a cosmetic such as a foundation, as they present a good texture such as excellent spreadability and a soft and elastic touch, when applied to the skin, by virtue of their sphericity and hollow structure.

Now, the process of the present invention will be described. The glass formulation material in the present invention is one vitrifiable by heating and it is preferably a volcanic glass debris or zeolite which undergoes weight reduction by ignition. In the present invention, a synthetic or natural material or a mixture of such materials, or more preferably, a mixture having an inorganic substance which generates a gas when heated, incorporated, is formulated to provide a prescribed composition, and basically, such a glass formulation material is wet-pulverized in a combustible liquid such as an alcohol, kerosine, light oil or heavy oil to obtain a slurry of the powder material having an average particle size of at most 2.0 µm. Such a slurry is, for example, sprayed to form fine liquid droplets containing the material, and then the droplets are heated, whereby they are vitrified and formed into hollow glass microspheres.

Now, the process of the present invention will be described in detail. As the volcanic glass debris to be used as the raw material, natural volcanic glass such as volcanic ash, obsidian, perlite or fluorite, may preferably be used. Such a material is produced in Kyushu or in Hokkaido. Among them, secondary sedimentary volcanic ash produced in Yoshida-machi, Kagoshima-ken, Kyushu, is particularly effective to make the true density of the resulting hollow glass microspheres small and thus is suitably employed.

As the zeolite, a synthetic or natural product may be employed, such as zeolite 3A, zeolite 4A, zeolite 5A, zeolite X, zeolite Y, zeolite L, zeolite P, zeolite AZM, faujasite type zeolite or natural zeolite, which has an ignition loss.

Further, a natural or synthetic mineral which has an ignition loss, such as bentonite or allophane, may also be used. However, from the viewpoint of the yield of hollow bodies, the physical properties of the product, availability of an inexpensive raw material having a constant composition, etc., volcanic ash, obsidian, perlite, fluorite or zeolite is preferred.

When hollow glass microspheres are produced by using such a raw material, it is further effective to add an inorganic substance which, when heated, generates a gas component.

A preferred inorganic substance to be added, may, for example, be one which generates a gas component such as carbon dioxide gas, sulfur oxide or nitrogen oxide, when heated, such as a sulfate, carbonate or nitrate of an alkali metal such as Na₂SO₄, Na₂CO₃, NaNO₃, K₂SO₄, K₂CO₃, KNO₃, Li₂SO₄, Li₂CO₃ or LiNO₃, or a sulfate, carbonate or nitrate of an alkaline earth metal such as CaSO₄, CaCO₃, Ca(NO₃)₂, MgSO₄, MgCO₃, Mg(NO₃)₂, BaSO₄, BaCO₃ or Ba(NO₃)₂, a carbide or nitride of silicon, or a carbide or nitride of aluminum. Further, a substance having a hydrate such as bound water, which generates steam when heated, may also be used and may be selected depending upon the required quality of the desired hollow microspheres.

For the wet pulverization of the material, as the liquid to be used for the wet pulverization, a combustible liquid is preferred for the subsequent spraying and heating. Among them, it is preferred to use the same material as the liquid for the slurry, since the operation step can be simplified. The combustible liquid may, for example, be an alcohol such as methanol, ethanol or isopropyl alcohol, an ether, kerosine, light oil or heavy oil. This liquid may be a mixture of these combustible liquids, or may contain other liquid such as water.

Further, for the dispersion of the slurry or stabilization of the dispersion, a dispersing agent or a dispersion stabilizer may be added. The dispersing agent may, for example, be a nonionic surfactant, a cationic surfactant, an anionic surfactant or a polymer type surfactant. Among them, a polymer anionic surfactant is preferred. For example, an acid-containing oligomer which is a copolymer of acrylic acid and an acrylate and which has a large acid value such that the acid value is at a level of from 5 to 100 mgKOH/g, is preferred. Such a polymer anionic surfactant is advantageous in that it not only contributes to the dispersion of the slurry and the stabilization of the dispersed state, but also is effective to control the viscosity of the slurry to be low.

With respect to the concentration of the formulated powder material in the liquid in the wet pulverization step, it is preferred to adjust the amount of the liquid so that it becomes the same as the concentration of the glass formulation material in the slurry which is required for spraying, whereby the operation can be simplified.

The wet pulverizer to be used is preferably a medium-stirring mill represented by a beads mill from the viewpoint of the pulverization speed or the final particle size. However, it may be a wet pulverizer such as a ball mill, a grind mill, an ultrasonic pulverizer or a high pressure fluid static mixer. Contamination from the material of the pulverizer may lower the yield or the strength of the hollow glass microspheres depending upon its composition and amount of inclusion. Accordingly, the material of the portion in contact with the liquid, is preferably selected from alumina, zirconia or an alumina/zirconia composite ceramics. Otherwise, it may be a material having a composition similar to the raw material.

The average particle size (based on volume) of the glass formulation material after the wet pulverization is at most 2.0 µm, and it tends to be difficult to obtain hollow glass microspheres having a uniform composition especially when a plurality of materials are mixed or a recycled material removed by classification or flotation is formulated. The average particle size of the glass formulation material after the wet pulverization is more preferably within a range of from 0.01 to 1.0 µm.

In a case where particles having large particle sizes are contained in the wet-pulverized glass formulation material, the material may be classified in a wet state to select the material having a predetermined particle size for use. Even when pulverized to an average particle size of less than 0.01 µm, there will be no problem in the subsequent operation, if the concentration and the viscosity of the slurry are adjusted. However, such is not preferred for a mass production on an industrial scale, since the installation or the power consumption for the pulverization will be excessive.

In a case where the glass formulated material thus obtained does not have a predetermined concentration as a slurry, a liquid corresponding to the deficient amount, is added so that the glass formulation material will have the predetermined concentration. If the concentration of the formulated material in the slurry is too low, the productivity decreases, and if it is too high, the viscosity of the slurry increases, whereby the handling tends to be difficult, and agglomeration is likely to result, whereby hollow glass microspheres tend to have a large particle size. The concentration of the glass formulation material in the slurry is preferably from 5 to 50 mass%, particularly preferably from 10 to 40 mass%.

Then, this slurry is formed into droplets. The droplets contain the glass formulation material. As a method for forming such droplets, a method for forming droplets by spraying under pressure, a method for forming droplets by ultrasonic waves, a method for forming droplets by a centrifugal force, or a method for forming droplets by static electricity, may, for example, be mentioned. However, from the viewpoint of the productivity, it is preferred to employ a method for forming droplets by spraying under pressure. The following two methods may be exemplified as the method for forming droplets by spraying under pressure.

The first method for forming droplets is a method of using a binary fluid nozzle to form droplets under a gas pressure of from 0.1 to 2 MPa. Here, if the gas pressure is less than 0.1 MPa, the action to form fine droplets by blast gas tends to be too low, whereby the particle size of the resulting hollow glass microspheres tends to be too large, and it tends to be difficult to obtain microspheres having the desired particle size. On the other hand, if the gas pressure exceeds 2 MPa, the combustion tends to be instable, and flame off is likely to result, or the installation or the required power for pressurizing tends to be excessive, such being undesirable for industrial operation.

As such a gas, any one of air, nitrogen, oxygen and carbon dioxide may suitably be used. However, with a view to obtaining hollow glass microspheres excellent in the surface smoothness or from the viewpoint of the control of the combustion temperature, the oxygen concentration is preferably at most 30 vol%, whereby the combustion before completion of forming the slurry into droplets in the spray granulation process, is suppressed, and after the formation of droplets is completed and the predetermined droplets are formed, the droplets will be burned. By such a control, the particle size distribution of droplets will be fine and sharp, and consequently, the particle size distribution of microspheres will be fine and sharp, whereby light weight hollow microspheres can be obtained in good yield.

The second method for forming droplets is a method of spraying the slurry by exerting a pressure of from 1 to 8 MPa to the slurry, to form droplets. If this pressure is less than 1 MPa, the particle size of the hollow glass microspheres tends to be too large, whereby it tends to be difficult to obtain microspheres having the desired particle size. On the other hand, if this pressure exceeds 8 MPa, the combustion tends to be instable, and flame off is likely to result, or the installation or the required power for pressurizing tends to be excessive, such being undesirable for industrial operation.

The formed droplets contain the glass formulation material having the desired composition. If the size of such droplets is too large, the combustion tends to be instable, or large particles are likely to form, or the particles are likely to burst during the heating or combustion to form an excessively fine powder, such being undesirable. If the granulated product made of the pulverized powder material is excessively small, the resulting glass composition tends to be hardly uniform, whereby the yield of hollow glass microspheres tends to be low, such being undesirable. A preferred size of droplets is within a range of from 0.1 to 70 µm.

When such droplets are heated, the glass formulation material is melted and vitrified, and further, the foaming component in the glass will be gasified to form hollow glass microspheres. As the heating means, an optional one such as combustion heating, electric heating or induction heating, may be used. The heating temperature depends on the temperature for vitrification of the glass formulation material. Specifically, it is within a range of from 800 to 1,700°C. In the present invention, as the most suitable means, since the liquid component of the slurry is combustible liquid, the melting and foaming of the glass are carried out by the heat generation by the combustion of such a liquid.

The hollow glass microspheres thus formed, are recovered by a known method such as a method using a cyclone, a bag filter, a scrubber or a packed tower. Then, a non-foamed product in the recovered powder is removed, and only the foamed product is recovered by a flotation separation method by means of water. In a case of selecting a foamed product having a low density, it is effective to employ a flotation method by means of e.g. an alcohol having a low specific gravity.

In the flotation step, it is very effective to disperse in water the hollow glass microspheres heated and foamed in the above described process of the present invention and further to separate and remove particles having a density larger than 1.0 g/cm³ by a centrifugal force, in order to obtain a product, of which the average particle density is lighter than 0.7 g/cm³, and it is thereby possible to improve the productivity. Namely, as the size becomes finer, removal of perforated hollow bodies tends to be difficult simply by mixing with water and being left to stand. Namely, broken segments of hollow bodies can be sedimented and separated simply by dispersing them in water, but with perforated hollow bodies, as the size becomes finer, it tends to be difficult for water to enter thereinto, whereby it tends to be difficult to separate them.

Further, for the same reason, if the formed hollow bodies are preliminarily deaerated under reduced pressure and then dispersed in water, or dispersed in water and then deaerated under reduced pressure, and thereafter, particles having a density of higher than 1.0 g/cm³ are separated and removed by a centrifugal force, perforated defective hollow bodies can be more completely removed, and the product can be made lighter in weight.

According to the present invention, it is possible to obtain hollow aluminosilicate glass microspheres which have a fine particle size, a high sphericity, high strength and also high heat resistance. This is considered attributable to the fact that due to the process of building up the finely pulverized aluminosilicate glass material and spraying of the slurry, the sizes of droplets can readily be uniform, and one droplet will form one glass microsphere, which is foamed and becomes hollow to form one hollow glass microsphere. Further, it is considered that formation of melt particles substantially by droplet units, is attributable to a mechanism such that integration of droplets is prevented by the combustion gas generated when the slurry in the form of droplets is burned.

Further, by exerting a centrifugal force at the time of separating and collecting the light weight hollow bodies by flotation in water, or further exerting a centrifugal force after deaeration, the density of the product hollow bodies can be substantially reduced in weight, since water can be penetrated into perforated particles having fine diameters. Further, formation of a silica layer on the surface by e.g. perhydropolysilazane, serves to effectively prevent elution of sodium.

Now, the present invention will be described in further detail with reference to Examples. However, it should be understood that the present invention is by no means restricted to such specific Examples.

### EXAMPLE 1

1.0 kg of secondary sedimentary volcanic ash produced in Yoshida-machi, Kagoshima-ken, as a volcanic glass debris, was mixed with 4.0 kg of kerosine, and 100 g of Homogenol L1820, an anionic surfactant, manufactured by Kao Corp., was further added to obtain a slurry. This slurry was wet-pulverized by a medium-stirring type mill to obtain a slurry material.

The medium-stirring type mill used, had an internal capacity of 1,400 cm³, and it was made of zirconia as its material. Beads were made of zirconia and had an average diameter of 0.65 mm φ, and 1,120 cm³, of such beads were put and used. The operation condition was such that the rotational speed was 2,500 rpm, and the wet pulverization was carried out for 30 minutes. From the obtained slurry material, finely pulverized volcano ash was recovered and observed by SEM, whereby the average particle size was 0.5 µm.

The obtained slurry material was sprayed by a binary fluid nozzle and ignited by a pilot burner to carry out spray combustion, whereby hollow glass microspheres were prepared. The hollow glass microspheres were recovered by a bag filter and then mixed with water, and the product floated on water was centrifugally separated to measure the water flotation ratio, whereby it was confirmed that about 20 mass% floated on the water surface.

The hollow glass microspheres which floated on the water surface were recovered and then the average particle size was measured by a laser scattering type particle size measuring apparatus, whereby the average particle size was 15.0 µm. Further, the true density was measured by a dry automatic densimeter, whereby it was 0.68 g/cm³. The particle shapes were confirmed by a SEM observation, whereby substantially all particles were within a range of 1≦(long axial length/short axial length)<1.2, and no broken fragments of hollow bodies were observed, and perforated hollow bodies were not substantially observed.

Further, at the time of separation of the product which floated on water, the powder was subjected to reduced pressure of 0.01 MPa at 20°C in a container, and water was added while maintaining the reduced pressure to obtain a slurry of 5 mass%. Then, centrifugal separation was carried out again to measure the water flotation ratio, whereby it was confirmed that about 85 mass% floated on the water surface. In the same manner as described above, the hollow glass microspheres which floated on the water surface were recovered, and then, the average particle size was measured by a laser scattering type particle size measuring apparatus, whereby the average particle size was 16.3 µm.

Further, the true density was measured by a dry automatic densimeter, and it was 0.62 g/cm³. The particle shape was confirmed by a SEM observation, whereby substantially all particles were within a range of 1≦(long axial length/short axial length)<1.2, and broken fragments of hollow bodies or perforated hollow bodies were not observed at all.

With respect to this sample, the strength at 10 volume% collapse was measured by a pressure resistance test apparatus, whereby 8.5 volume% was broken at 100 MPa which is the limit for imparting the pressure, and thus the strength at 10 volume% collapse was at least 100 MPa. Further, the value by the formula for strength is 770 MPa when calculated by using the Young's modulus of 86 GPa of the aluminosilicate glass, and the real strength at 10 volume% collapse was at least 10% of the collapse strength calculated by the formula of the strength.

The chemical analytical values of the obtained hollow aluminosilicate glass microspheres were such that SiO₂: 73.5 mass%, Al₂O₃: 14.1 mass%, Na₂O: 4.3 mass%, K₂O: 4.1 mass%, CaO: 2.0 mass%, Fe₂O₃: 2.0 mass%, and B₂O₃: 0.0 mass%.

Further, the hollow aluminosilicate glass microspheres were maintained at 600°C for one hour in a platinum crucible, and then the average particle size and the true density were measured, whereby no change was observed.

### EXAMPLE 2

A slurry material was obtained by carrying out wet pulverization in the same manner as in Example 1 except that 1.0 kg of secondary sedimentary volcanic ash produced in Yoshida-machi, Kagoshima-ken, and 35.5 g of Na₂SO₄ were mixed with 4.0 kg of kerosine, and 100 g of the above-mentioned Homogenol L1820, were further added to obtain a slurry. From the obtained slurry material, a powder mixture of the volcanic ash and Na₂SO₄, was recovered and observed by SEM, whereby the average particle size was 0.7 µm.

The obtained slurry material was sprayed by a binary fluid nozzle and ignited by a pilot burner for spray combustion to obtain hollow glass microspheres. The hollow glass microspheres were recovered by a bag filter and then mixed with water, and the product which floated on water was centrifugally separated to measure the water flotation ratio, whereby it was confirmed that about 30 mass% floated on the water surface.

The hollow glass microspheres which floated on the water surface were recovered and then the average particle size was measured by a laser scattering type particle size measuring apparatus, whereby the average particle size was 11.5 µm. Further, the true density was measured by a dry automatic densimeter, whereby it was 0.63 g/cm³. The particle shapes were confirmed by the SEM observation, whereby substantially all particles were within a range of 1≦(long axial length/short axial length)<1.2, and no broken fragments of the hollow bodies were observed, and perforated hollow bodies were not substantially observed.

Further, for the separation of the product which floated on water, the powder was subjected to reduced pressure of 0.01 MPa at 20°C in a container, and water was added while maintaining the reduced pressure to obtain a slurry. Then, centrifugal separation was carried out again to measure the water flotation ratio, whereby it was confirmed that about 90 mass% floated on the water surface. In the same manner as in Example 1, the hollow glass microspheres which floated on the water surface were recovered, and then, the average particle size was measured by a laser scattering type particle size measuring apparatus, whereby the average particle size was 13.2 µm.

Further, the true density was measured by a dry automatic densimeter, and it was 0.59 g/cm³. The particle shape was confirmed by the SEM observation, whereby substantially all particles were within a range of 1≦(long axial length/short axial length)<1.2, and broken fragments of the hollow bodies or perforated hollow bodies were not observed at all.

Then, 100 g of the obtained hollow glass microspheres were batched off, and while stirring them in a pot type mixer having an internal capacity of 5,000 cm³, 60 g of a perhydropolysilazane solution diluted to 20% with xylene, was sprayed by a spray so that it was uniformly applied to the hollow glass microspheres. The microspheres were dried in a hot air of 200°C by a flash drier. Then, the dried hollow glass microspheres were spread in a porcelain container and baked in a small size electric furnace at 450°C for one hour.

5 g of such a surface treated product was immersed in a pure water of 100°C for 24 hours by means of a fluorine resin container, and the eluted amount of sodium was measured by an atomic absorption method, whereby the eluted amount was 1.1 mg. On the other hand, as a comparison, the similar operation was carried out without applying the surface treatment, and the eluted amount of sodium was measured, whereby the eluted amount was 58 mg. Thus, the effect for suppressing elution of sodium by perhydropolysilazane, was proved.

The chemical analytical values of the obtained hollow aluminosilicate glass microspheres were such that SiO₂: 72.5 mass%, Al₂O₃: 13.9 mass%, Na₂O: 5.6 mass%, K₂O: 4.1 mass%, CaO: 2.0 mass%, Fe₂O₃: 1.9 mass%, and B₂O₃: 0.0 mass%.

Further, the hollow aluminosilicate glass microspheres were maintained at 600°C for one hour in a platinum crucible, and then the average particle size and the true density were measured, whereby no change was observed.

### EXAMPLE 3

A slurry material was obtained by carrying out wet pulverization in the same manner as in Example 1 except that 1.0 kg of secondary sedimentary volcanic ash produced in Yoshida-machi, Kagoshima-ken, and 33.5 g of Li₂CO₃ were mixed with 4.0 kg of kerosine, and 100 g of the above-mentioned Homogenol L1820, were further added to obtain a slurry. From the obtained slurry material, the powder mixture of the volcanic ash and Li₂CO₃, was recovered and observed by SEM, whereby the average particle size was 0.6 µm.

The obtained slurry material was sprayed by a binary fluid nozzle and ignited by a pilot burner for spray combustion to obtain hollow glass microspheres. The hollow glass microspheres were recovered by a bag filter and then mixed with water, and the product which floated on water was centrifugally separated to measure the water flotation ratio, whereby it was confirmed that about 35 mass% floated on the water surface.

The hollow glass microspheres which floated on the water surface were recovered and then the average particle size was measured by a laser scattering type particle size measuring apparatus, whereby the average particle size was 15.3 µm. Further, the true density was measured by a dry automatic densimeter, whereby it was 0.51 g/cm³. The particle shape was confirmed by the SEM observation, whereby substantially all particles were within a range of 1≦(long axial length/short axial length)<1.2, and no broken fragments of the hollow bodies were observed, and perforated hollow bodies were not substantially observed.

At the time of separation of the product which floated on water, the powder was subjected to a reduced pressure of 0.01 MPa at 20°C in a container, and water was added while maintaining the reduced pressure to obtain a slurry. Then, centrifugal separation was carried out again to measure the water flotation ratio, whereby it was confirmed that about 95 mass% floated on the water surface. In the same manner as described above, the hollow glass microspheres which floated on the water surface were recovered, and then, the average particle size was measured by a laser scattering type particle size measuring apparatus, whereby the average particle size was 17.0 µm. Further, the true density was measured by a dry automatic densimeter, and it was 0.49 g/cm³.

The particle shape was confirmed by the SEM observation, whereby substantially all particles were within a range of 1≦(long axial length/short axial length)<1.2, and broken fragments of the hollow bodies or perforated hollow bodies were not observed at all. With respect to this sample, the strength at 10 volume% collapse was measured, whereby it was 50 MPa. Further, the value by the formula for strength was calculated in the same manner as in Example 1, whereby it was 330 MPa, and the real strength at 10 volume% collapse was at least 15% of the collapse strength calculated by the formula for strength.

The chemical analytical values of the obtained hollow aluminosilicate glass microspheres were such that SiO₂: 72.5 mass%, Al₂O₃: 13.9 mass%, Na₂O: 4.3 mass%, K₂O: 4.1 mass%, Li₂O: 1.3 mass%, CaO: 2.0 mass%, Fe₂O₃: 1.9 mass%, and B₂O₃: 0.0 mass%.

Further, after maintaining the hollow aluminosilicate glass microspheres at 600°C for one hour in a platinum crucible, the average particle size and the true density were measured, whereby no change was observed.

### EXAMPLE 4 (COMPARATIVE EXAMPLE)

A secondary sedimentary volcanic ash produced in Yoshida-machi, Kagoshima-ken, was dry-pulverized to an average particle size of 12 µm by means of an ACM pulverizer which is an impact type pulverizer internally equipped with a classifier, manufactured by HOSOKAWA MICRON CORP. 100 parts by mass of this pulverized powder was added to 160 parts by mass of an aqueous solution containing 0.05 mol/ℓ of aluminum sulfate (the proportion of aluminum sulfate to the powder: about 3.5 parts by mass), a 1 mol/ℓ ammonium hydrogencarbonate aqueous solution was further dropwise added over a period of two hours to the equivalent amount to hydrolyze the entire amount of aluminum sulfate. After completion of the dropwise addition, the covering-treated solid was collected by filtration, then washed with water and spread thinly in a standing-still type constant temperature drier set at 105°C and dried for 5 hours.

Then, this powder was dried at 120°C and then put into a flame formed by a LPG gas burner while stirring with air pressurized to prevent agglomeration. The melted and foamed powder was recovered by a bag filter and then mixed with water, whereupon the product which floated on water was left to stand still and recovered.

With respect to the recovered powder, the average particle size was measured by a laser scattering type particle size measuring apparatus, whereby the average particle size was 16.8 µm. Further, the true density was measured by a dry automatic densimeter, whereby it was 0.98 g/cm³. The particle shape was confirmed by the SEM observation, whereby with particles of more than one half of the total, the ratio of long axial length/short axial length was at least 1.2, and at least one half of the total were not independent formed spheres and had a shape having a plurality of large and small foamed spheres agglomerated.

Then, in the same manner as in Example 1, after deaeration under reduced pressure, water was mixed to form a slurry, which was subjected to centrifugal separation. The average particle size was measured by a laser scattering type particle size measuring apparatus, whereby the average particle size was 18.2 µm. Further, the true density was measured by a dry automatic densimeter, and it was 0.85 g/cm³. The particle shape was confirmed by the SEM observation, whereby with particles of more than one half of the total, a ratio of long axial length/short axial length was at least 1.2, and at least one half of the particles were not independent formed spheres and had a shape having a plurality of large and small foamed spheres agglomerated.

### EXAMPLE 5(COMPARATIVE EXAMPLE)

490 g of silicon dioxide, 90 g of sodium carbonate, 123 g of calcium carbonate, 187 g of boric acid, 8 g of zinc oxide, 4 g of aluminum oxide, 29 g of calcium secondary phosphate, 19 g of lithium carbonate, 11 g of potassium carbonate and 9 g of sodium sulfate were mixed into 4,000 g of kerosine oil, and then, 100 g of the above-mentioned Homogenol L1820 was further added, followed by wet pulverization in the same manner as in Example 1 by means of a medium-stirring type mill, to obtain a slurry of a glass formulation material.

From the obtained slurry of a glass formulation material, the glass formulation material was recovered and observed by SEM, whereby the average particle size was 0.5 µm.

The obtained slurry of a glass formulation material was sprayed by a binary fluid nozzle and ignited by a pilot burner to carry out spray combustion to obtain hollow glass microspheres. The hollow glass microspheres were recovered by a bag filter and then mixed with water, whereupon the product which floated on water was centrifugally separated to measure the water flotation ratio, whereby it was confirmed that 40 mass% was floated on the water surface. The hollow glass microspheres which floated on the water surface were recovered, and then, the average particle size was measured by a laser scattering type particle size measuring apparatus, whereby it was 15 µm, and the particle shape was confirmed by the SEM observation, whereby substantially all particles were within a range of 1≦(long axial length/short axial length)<1.2. Further, the true density of the product which floated on water, as measured by a dry automatic densimeter, was 0.54 g/cm³.

The chemical analytical values of the obtained hollow aluminosilicate glass microspheres were such that SiO₂: 64.2 mass%, Al₂O₃: 0.5 mass%, Na₂O: 5.3 mass%, K₂O: 0.8 mass%, / Li₂O: 0.8 mass%, CaO: 15.7 mass%, B₂O₃: 11.7 mass%, and ZnO: 1.0 mass%.

Further, the hollow glass microspheres were maintained at 600°C for one hour in a platinum crucible, and then the average particle size and the true density were measured, whereby the average particle size was 29 µm, and the true density was 0.91 g/cm³, and it was confirmed that the heat resistance was poor, the particles were fused to one another, and a part of hollow portions was fractured.

As described in the foregoing, according to the present invention, it is possible to obtain hollow glass microspheres having a high heat resistance as compared with the conventional hollow glass microspheres of borosilicate glass type, which have a fine particle size, high sphericity, low density and high strength, and further, such hollow aluminosilicate glass microspheres can be efficiently and industrially produced as compared with the conventional process for producing hollow glass microspheres obtainable from a volcanic ash material.

The entire disclosure of Japanese Patent Application No. 2000-148525 filed on May 19, 2000 including specification, claims and summary are incorporated herein by reference in its entirety.

## Claims

1. Hollow aluminosilicate glass microspheres which are hollow glass microspheres having an average particle size of from 1 to 20 µm based on volume, an average particle density of from 0.20 to 1.50 g/cm³, a sphericity within a range of 1≦(long axial length/short axial length)<1.2 and a composition comprising from 30 to 85 mass% of SiO₂, from 6 to 45 mass% of Al₂O₃, from 0 to 30 mass% of an alkali metal oxide, from 0 to 30 mass% of an alkaline earth metal oxide and from 0 to 1 mass% of B₂O₃, and which have a strength at 10 volume% collapse of at least 10% of the theoretical strength given by the formula 16.7×E×(t/2a)^{2.5}, where E is the Young's modulus (unit: GPa) of the glass constituting the hollow glass microspheres, t is the thickness (unit: mm) of the shell of the hollow glass microspheres, and a is the hollow radius (unit: mm) of the hollow glass microspheres.

2. The hollow aluminosilicate glass microspheres according to Claim 1, having an average particle density of from 0.20 to 0.70 g/cm³.

3. The hollow aluminosilicate glass microspheres according to claim 1 or 2, having a silica layer formed on the surface.

4. A process for producing hollow aluminosilicate glass microspheres, which comprises subjecting a glass formulation material to wet pulverization to obtain a slurry of the material having an average particle size of at most 2 µm, forming the slurry into droplets containing the glass formulation material, heating the droplets to vitrify them and to convert them to hollow glass microspheres which are hollow glass microspheres having an average particle size of from 1 to 20 µm based on volume, an average particle density of from 0.20 to 1.50 g/cm³, a sphericity within a range of 1≦(long axial length/short axial length)<1.2 and a composition comprising from 30 to 85 mass% of SiO₂, from 6 to 45 mass% of Al₂O₃, from 0 to 30 mass% of an alkali metal oxide, from 0 to 30 mass% of an alkaline earth metal oxide and from 0 to 1 mass% of B₂O₃, and which have a strength at 10 volume% collapse of at least 10% of the theoretical strength given by the formula 16.7×E×(t/2a)^{2.5}, where E is the Young's modulus (unit: GPa) of the glass constituting the hollow glass microspheres, t is the thickness (unit: mm) of the shell of the hollow glass microspheres, and a is the hollow radius (unit: mm) of the hollow glass microspheres.

5. The process for producing the hollow aluminosilicate glass microspheres according to Claim 4, wherein an inorganic substance which, when heated, generates steam, carbon dioxide gas, sulfur oxide or nitrogen oxide gas, is added to the glass formulation material.

6. The process for producing the hollow aluminosilicate glass microspheres according to Claim 4 or 5, wherein the formed hollow glass microspheres are dispersed in water and particles having a density of higher than 1.0 g/cm³ are separated and removed by a centrifugal force.

7. The process for producing the hollow aluminosilicate glass microspheres according to Claim 6, wherein the formed hollow glass microspheres are deaerated under reduced pressure and then dispersed in water, or dispersed in water and then deaerated under reduced pressure, and then particles having a density of higher than 1.0 g/cm³ are separated and removed by a centrifugal force.
